# EUROPEAN PATENT APPLICATION

(11) **EP 1 294 132 A2**
(43) Date of publication of application: **19.03.2003**
(21) Application number: 02020077.0
(22) Date of filing: 06.09.2002
(51) Int. Cl.: H04L 12/46, H04L 12/28

(54) **Network apparatus, network controller, and method of controlling the network apparatus**

(30) Priority: 11.09.2001 JP 2001274425
(71) Applicant: Hitachi, Ltd., Chiyoda-ku, Tokyo 101-8010 (JP)
(72) Inventor: Kudo, Yoshimichi, c/o Hitachi, Ltd. Int.Prop.Group, Chiyoda-ku, Tokyo 100-8220 (JP)
(74) Representative: Strehl Schübel-Hopf & Partner

(57) **Abstract**

An AV-type network is connected to an information-type network. A controller of the AV-type network controls apparatuses connected to the AV-type and information-type networks without requiring user's operation such as address setting. A network controller to control network apparatuses connected to an AV-type network and a network for electric appliances for consumer use is connected to an IP network. A control transfer unit is disposed in the network controller to control apparatuses connected to the networks from the IP network. The network controller on the IP network obtains function information of the network apparatuses including the control transfer unit to conduct a control operation to thereby control any apparatuses connected to the networks.

## Description

### BACKGROUND OF THE INVENTION

The present invention relates to a control method between apparatuses connected to a network, the apparatuses connected to the network, and a controller to control the apparatuses and in particular, to a method of conducting control of apparatuses on mutually different networks of two or more types in a house of a family to control the apparatuses by simple operations of users.

As a result of development of digitalization of information apparatuses for family use and broadly developed use of the internet, a network is constructed in a house of a general family. One of the family networks is a network for information or an information-type network in which accesses to the internet, operation of a printer, and the like are shared between a plurality of personal computers (PC) such as desk-top personal computers, and/or notebook personal computers of respective family members. Typical networks of this kind include a local-area network (LAN) using twisted pairs such as 100BASE-TX and a wireless LAN according to the Institute of Electrical and Electronics Engineers (IEEE) 802.11b standard. The networks generally employ the transmission control protocol (TCP)/internet protocol (IP) broadly used in computer networks such as the internet. In the description below, an information-type network employing the TCP/IP will be referred to as "IP network".

On the other hand, since audiovisual (AV) apparatuses such as a television set (TV) and a videocassette recorder (VCR) have been digitalized, a digital satellite broadcast receiver, a television set including the broadcast receiver, a VCR and a video camera of digital recording type, a hard disk (HD) recorder using a hard disk drive as a recording medium, and a recorder using an optical disk such as a digital video disk (DVD) random access memory (RAM) become available. To take advantage of a characteristic of the digital system that quality of signals is hardly deteriorated through transmission and storage of the signals, an increased number of digital AV apparatuses are implemented using a high-speed serial interface (1394IF) according to the IEEE1394 standard to connect the apparatuses to each other. Originally, the 1394 interface is designed as a bus for apparatuses in a peripheral layer of a personal computer. However, the 1394 interface has a maximum data transfer speed of 400 megabits per second (Mbps) and an isochronous transfer mode suitable to continuously transfer AV data used in AV apparatuses. Furthermore, when a cable is inserted or disconnected to one of the apparatuses, the condition is detected to automatically allocate a device ID to the apparatus. Therefore this advantageously mitigates operation load imposed on the user. Consequently, the 1394 interface has attracted considerable attention as a standard interface for digital audiovisual apparatuses. For this purpose, a protocol and a data format to transfer a moving picture expert group (MPEG) 2 transport stream (TS) widely used in digital AV apparatuses and a command communication protocol to control the AV apparatuses are stipulated as the International Electrotechnical Commission (IEC) 61883 standard. Also a control command specification for each audiovisual apparatus, for example, for each VCR or tuner is determined by a 1394 trade association (1394TA), an organization to enhance popularization of the apparatuses. Besides, HAVi Inc. established by manufacturers of electric appliances for consumer use has developed the audiovisual network software specification "home audio video interoperability" (HAVi) for guaranteeing compatibility to operate an apparatus of a communicating peer. An environment of 1394IF and HAVi therefore supports and facilitates a plug-and-play operation in which when a user connects an audiovisual apparatus to the environment, the user can immediately operate the audiovisual apparatus without any troublesome setting operation.

As a network standard of Home electric appliances for consumer use such as a refrigerator, a washing machine, and an air conditioner, ECHONET has been defined by an organization mainly including manufacturers of electric appliances for consumer use. ECHONET controls the apparatuses using physical media such as a power line or radio waves and has a unique format as a protocol.

IP networks differ in the purpose and requirements from AV-type networks and networks for electric appliances for cinsumer use. Consequently, the networks of these types have been heretofore developed in respective ways. However, high-speed access networks using an asymmetric digital subscriber line (ADSL) and/or a cable television network have been prepared also for general internet users such as users of general consumers. Broadband networks including services using optical fiber are being developed and spread in various fields. Thanks to the development of broadband systems, an internet access service using a wide band is provided at a fixed price or charge for continuous connection. This will possibly exert influence upon the networks used in homes. For example, the wide-band service of the broadband system makes it possible to provide, via the internet, high-quality AV contents which can be provided to homes only via broadcasting and package media in the prior art. When the permanent connection service is available at a fixed price for general users, the internet can be readily used in an upward access from an apparatus of a home to a service provider. The upward access is implemented, for example, by a digital satellite broadcast receiver using a dialup access via a telephone line in the prior art. Therefore, when the network for information and the network for AV apparatuses and electric appliances for consumer use operate in closer collaboration with each other, new services which are impossible in the prior art and new products having higher usability can be provided.

For example, JP-A-11-187061, JP-2000-224207, and JP-2001-202317 describe an apparatus control method in which a network using the 1394 interface is coupled with an information network also connected to devices outside the home to control, via the information network, apparatuses connected to the 1394 interface.

JP-A-11-187061 describes a technique in which AV apparatuses, information apparatuses such as a personal computer, a controller of a network for electric appliances for consumer use, and an apparatus to establish connection to a public telephone line such that a controller on the 1394 interface and an external device such as an apparatus in another home control the AV apparatuses and the electric appliances for consumer use connected to the associated network. According to the technique, an apparatus of information-processing type such as a personal computer is operated as a controller according to the method of the 1394 interface. Therefore, it is necessary to install the 1394 interface and associated processing software in the apparatuses of information-processing type. Moreover, JP-A-11-187061 does not pay attention to operation in which information-type network apparatuses of the prior art are also used.

JP-2000-224207 describes a technique in which a controller disposed on an information-type network controls apparatuses connected to a network using the 1394 interface. However, the article does not describe a control operation in which a controller on an AV-type network controls, via an information-type network, apparatuses on another AV-type network and apparatuses on the information-type network, which has already been implemented by an AV-type network of the prior art.

JP-2001-202317 describes a technique in which a controller connected to an AV-type network and an information-type network controls AV apparatuses at a position in a house and outside the house. However, the article does not describe a method for an apparatus on the AV-type network to control apparatuses connected to an information-type network.

### SUMMARY OF THE INVENTION

It is therefore an object of the present invention to provide a network apparatus control method in which when an AV-type network is connected to an information-type network, a control method of the conventional AV-type network is used such that a controller on the AV-type network controls each AV apparatus connected on the AV-type network as well as each apparatus connected to the information-type network and each apparatus connected to another AV-type network or a network for electric appliances for consumer use which are connected via an information-type network to the controller. According to the present invention, there are consequently provided a network controller, a network apparatus, and a method of controlling the network apparatus not requiring troublesome operation of the user such as an address setting operation.

To achieve the object according to the present invention, there is provided a network controller comprising a first network interface, first control means for controlling network apparatuses connected via the first network interface to a network, a second network interface, second control means for controlling network apparatuses connected via the second network interface to a network, and control transfer means for receiving control information from another network controller connected via the second network interface to a network and for transmitting a signal to the first control means according to the control information, thereby controlling apparatuses connected to the first and second networks. The network controller connected to the second network interface can control the network apparatuses connected to the first network.

According to the present invention, the network apparatus connected to the second network transmits function information of a controllable function of the network apparatus to the network controller. According to the function information transmitted from the network apparatus, the network controller issues a control instruction to control the network apparatus to thereby control the network apparatus and hence the network controller connected to the second network can control all network apparatuses. The network controller can also control via the control relay means the network apparatuses connected to the first network.

Other objects, features and advantages of the invention will become apparent from the following description of the embodiments of the invention taken in conjunction with the accompanying drawings.

### BRIEF DESCRIPTION OF THE DRAWINGS

Fig. 1 is a diagram showing a configuration of an embodiment of a network in a house according to the present invention.

Fig. 2 is a block diagram showing an embodiment of a digital television set as a network controller according to the present invention.

Fig. 3 is a block diagram showing a software configuration in the embodiment of a digital television set as a network controller according to the present invention.

Fig. 4 is a block diagram showing a network controller and a relationship between the network controller and network apparatuses in an embodiment according to the present invention.

Fig. 5 is a flowchart showing a procedure of operations in an embodiment of a network apparatus according to the present invention.

Fig. 6 is a flowchart showing a procedure of operations in an embodiment of a network controller according to the present invention.

Fig. 7 is a block diagram showing another embodiment of a network in a house according to the present invention.

### DESCRIPTION OF THE EMBODIMENTS

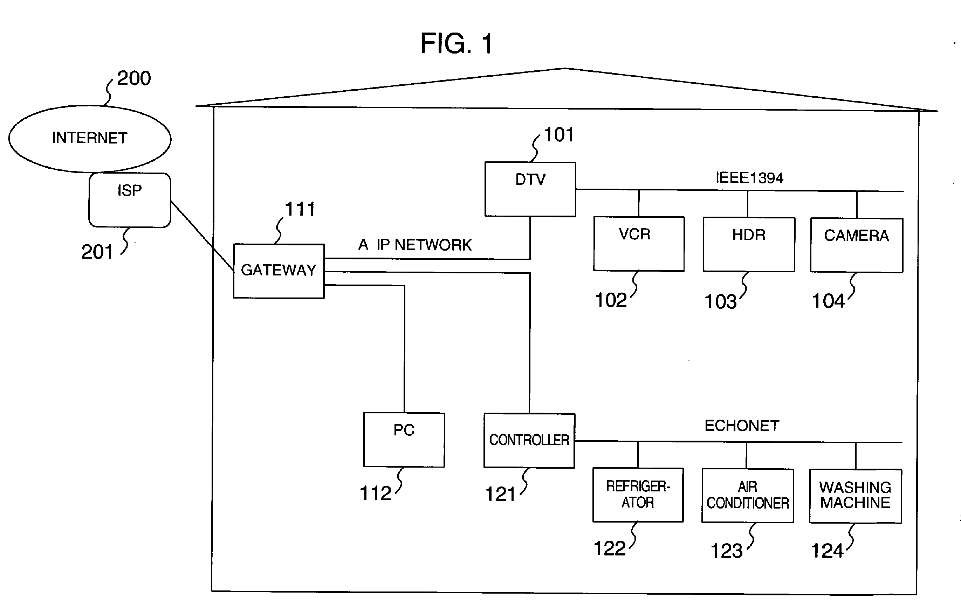

Description will now be given of an embodiment of the present invention by referring to the drawings. Fig. 1 shows an embodiment of a system configuration in which a network is configured in a house of a family by using a network controller and network apparatuses. In Fig. 1, a digital TV set 101 is a network controller of the present invention and is connected via the 1394 interface to a VCR 102, an HD recorder 103, and a video camera 104. The digital TV set 101 is also connected to a gateway unit 111 via an LAN and is hence coupled with an IP network connected to a personal computer 112 and an IP network connected to a controller 121 for electric appliances for family use. The gateway 111 has a router function to link a network in a family with a wide area network and a function of an ADSL modem or a cable modem and is connected via an internet service provider 201 to the internet 200. The gateway 111 need not be necessarily configured to integrally include a router and a modem. These units may be separately arranged. The controller 121 is connected to electric appliances for family use to control the appliances such as a refrigerator 122, an air conditioner 123, and a washing machine 124 via ECHONET using, for example, an electric code for an electric lamp as a medium.

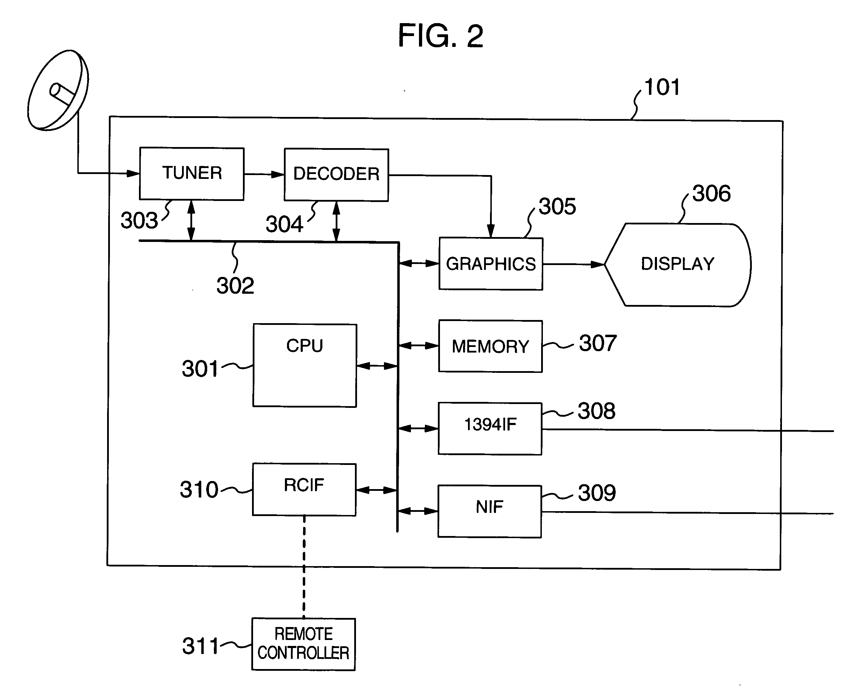

Fig. 2 shows in a block diagram an example of a detailed configuration of the digital TV set 101. In Fig. 2, a central processing unit 301 to control overall operation of the system is connected via a system bus 302 to a tuner 303, a decoder 304, a graphics processor 305, a memory 307, a 1394 interface unit 308, a network interface 309, and a remote controller interface 310. A signal received by an antenna is sent to the tuner 302 to select a program of the signal. The decoder 304 decodes the signal into a video signal to be fed via the graphics processor 305 to a display 306. The display 306 is a monitor display including a cathode-ray tube or a liquid-crystal panel and displays thereon a video image restored by the decoder 304. It is not necessary that the display 306 is integrally configured in the digital TV set 101. An external monitor display may be used as the display 306. The 1394 interface unit 308 is connected via the 1394 interface to AV apparatuses such as the VCR 102. In response to an instruction from the CPU 301, the 1394 interface unit 308 transmits a control command to each AV apparatus or receives an operation state of each apparatus. The 1394 interface unit 308 also receives AV data sent from each AV apparatus and sends the data to the decoder 303. The data is then decoded and is displayed on the display 306. To record AV data from the tuner 302, the data is sent to the 1394 interface unit 308. The network interface 309 receives control data from an IP network or sends control data to control a network apparatus connected to an IP network. The remote controller interface 310 receives a code representing a user's operation sent from an infrared remote controller 311 and sends the code to the CPU 301. In response thereto, the CPU 301 executes processing to generate control data necessary to control operation of the digital TV set 101 or to control a network apparatus connected to the 1394 interface or the IP network.

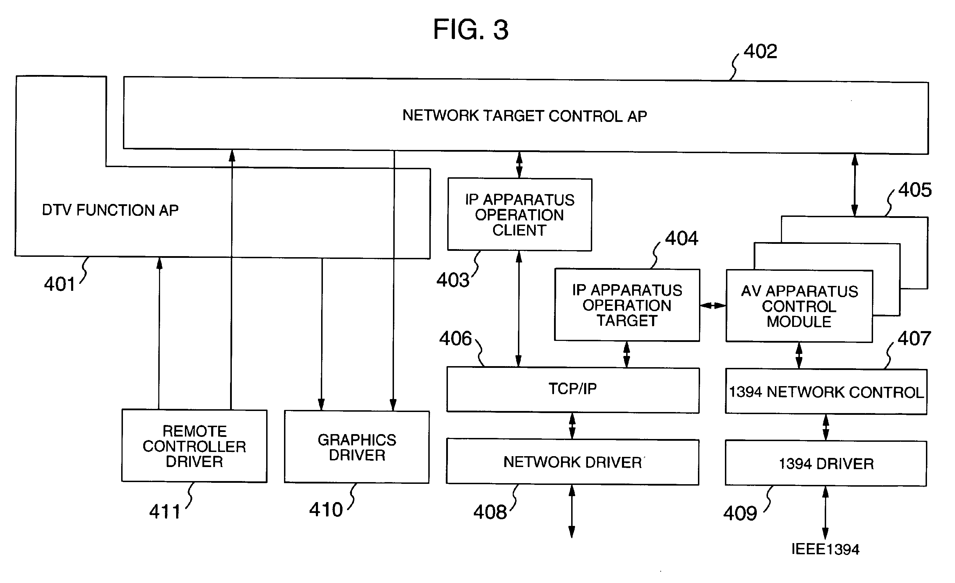

Fig. 3 shows a configuration of software operating under control of the CPU 301 in the embodiment of the digital TV set 101 according to the present invention. In Fig. 3, a digital TV function application (AP) 401 controls inherent functions of a receiver such as a function to receive broadcasting. The application 401 receives an input signal of a user's operation from a remote controller driver 411 and displays an operation screen image using a graphics driver 410. A network apparatus operation application controls apparatuses connected to the IP network and the 394 interface and implements a user interface using the remote controller driver 411 and the graphics driver 410. The network apparatus operation application operates network apparatuses using a service application interface (API) to control apparatuses connected to the IP network provided by an IP apparatus operation client module 403 and a service API to control apparatuses connected to a network of 1394 interface provided by an AV apparatus control module 405. The IP apparatus operation client 403 sends control data corresponding to a request received from the network apparatus operation application 402 via a TCP/IP stack 406 and a network driver 408 to a network apparatus as a control objective unit. The client 403 also notifies a reply from the network apparatus to the application 402. The AV apparatus control module 405 is prepared for each AV apparatuses connected to the 1394 interface. In response to a request received from the network apparatus operation application 402 via a 1394 network controller 407 and a 1394 driver 409, the module 405 sends control data to an AV apparatus as a control objective unit. The module 405 also notifies a reply from the AV apparatus to the application 402.

In a method of configuring a 1394 network controller 407, a network middle ware is used according to, for example, the HAVi specification. In the configuration, the AV apparatus control module 405 is arranged as a device control module (DCM) of the HAVi specification. When an AV apparatus is connected to the 1394 interface, a device control module corresponding to the control specification of the AV apparatus is uploaded from a read-only memory (ROM) in the AV apparatus or from a web site of a manufacturer of the AV apparatus. As a result, the network apparatus operation application can operate the AV apparatus.

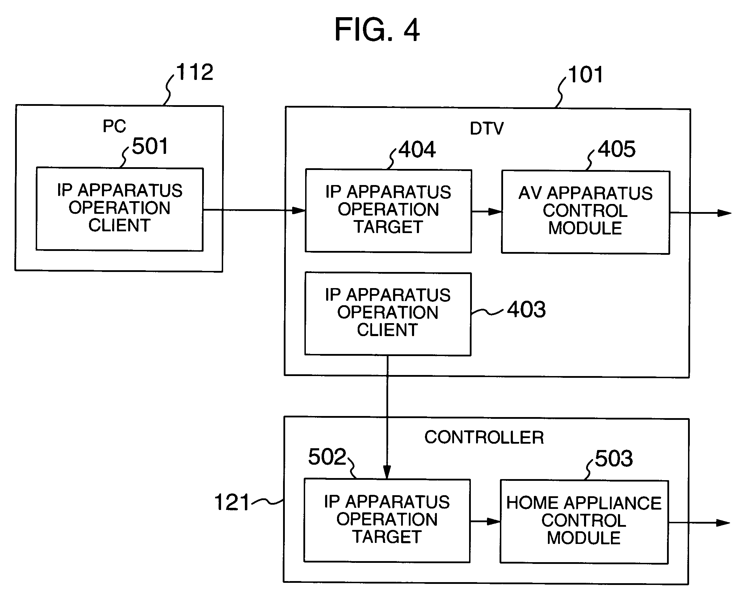

Fig. 4 shows a control relationship in an IP network section in the network of Fig. 1. The digital TV set 101 includes an IP apparatus operation target 404 to operate as a gateway to control, from the IP network, the AV apparatuses connected to the 1394 interface such as the VTR 102, the HD recorder 103, and the video camera 104. When a new AV apparatus is connected to the 1394 interface and the AV apparatus control module 405 is uploaded, the IP apparatus operation target 404 obtains an identifier (ID) of the AV apparatus on the 1394 interface using the control module 405. The operation target 404 issues a multicast message indicating addition of a new apparatus to the IP network side to obtain a new IP address and keeps the IP address with a relationship between the IP address and the ID of the new AV apparatus. When a control instruction including the IP address is issued from the IP network side to an AV apparatus specified by the IP address, the operation target 404 obtains an ID of the AV apparatus on the 1394 interface and transfers the control instruction to an AV apparatus control module 405 associated therewith. Giving the IP address to each of the AV apparatuses connected to the 1394 interface is an example. The digital TV set 101 includes the IP apparatus operation client 403 to control electric appliances for family use such as the refrigerator 122, the air conditioner 123, and the washing machine 124 connected to ECHONET via the IP apparatus operation target 502 of the controller 121. The digital TV set 101 accordingly operates as a controller including a user interface for the user to operate the electric appliances for family use. The personal computer 112 includes an IP apparatus operation client 501 to operate AV apparatuses using the IP apparatus operation target 404 of the digital TV set 101 and serves as a controller including a user interface to control the AV apparatuses. The controller 121 includes a control module 503 to control electric appliances for consumer use connected to ECHONET and an IP apparatus operation target 502 to use a service API provided by the module 503. In this way, the apparatuses connected to the IP network are controlled using a combination of an IP apparatus operation client and an IP apparatus operation target.

To control an AV apparatus, for example, operation between the IP apparatus operation client 501 and the IP apparatus operation target 404 is controlled in a procedure as below. A virtual IP address is assigned to each AV apparatus connected to the 1394 interface to discriminate the AV apparatus. To operate the AV apparatus from the IP network side, the IP address is used to specify the AV apparatus. Actually, each packet including a virtual IP address assigned to each AV apparatus is sent to the digital TV set 101. The IP apparatus operation target 404 converts the virtual IP address into a node ID of the 1394 interface. Next, to control the function of each AV apparatus, it is required to specify a type of apparatus, a type of function, and an operation parameter. Such information items may be defined by the user or system. However, the HAVi specification includes an operation ID to indicate a type of a VTR or a tuner, an API code indicating a type of operation for each type of apparatus, for example, "play" and "stop" for a VTR, and values of operation parameters. By using these information items and values covering all functions of AV apparatuses commonly used, it is not required for the user to define the items and values. It is also possible for a vendor to extend the items and values.

The procedure to control the electric appliances for consumer use, an IP address is assigned to each of the appliances for the discrimination thereof. The ECHONET standard defines, in its service API, types of the typical apparatuses, functions of each of the apparatuses, and operation parameters thereof. By using these items, it is not necessary for the user to define the items.

Assume that a network controller having an IP apparatus operation client or a network apparatus having an IP apparatus operation target is connected as a new unit to the IP network. As described below in detail, a multicast message issued from the apparatus thus connected to the network is used as a trigger. That is, the IP apparatus operation client collects and keeps therein information of the target functions of the IP apparatus operation target, specifically, a list of IP addresses and types of network apparatuses identified by the addresses, a list of controllable functions of the respective types of apparatuses, and a list of operation parameters necessary to control the respective functions. The network apparatus operation application collects the information of the target functions from the IP apparatus operation client and accordingly displays a graphic user interface (GUI) to operate the target apparatus.

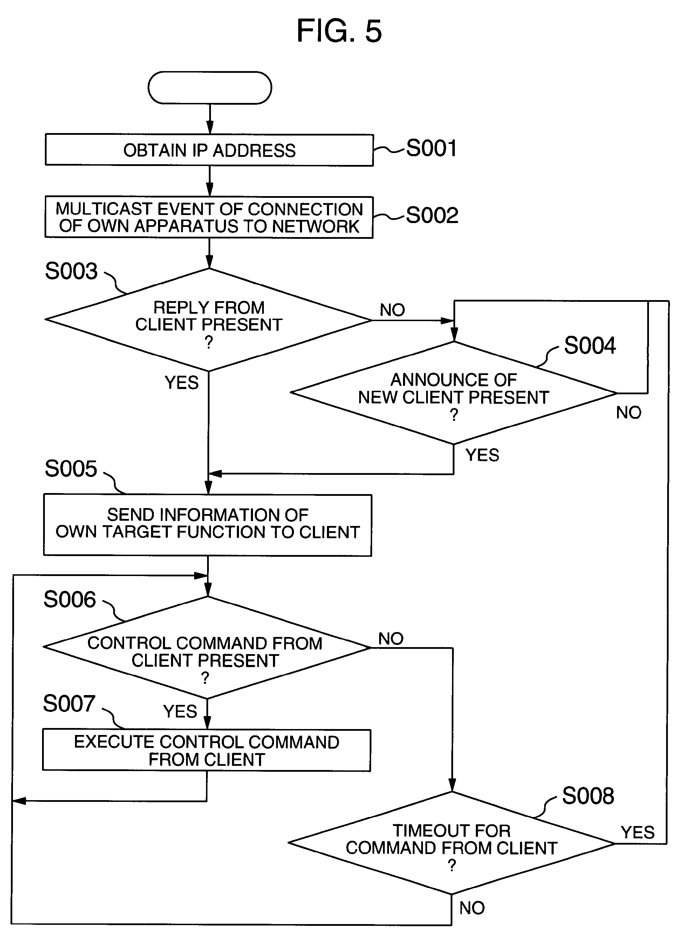

Fig. 5 shows a flow of processing of the IP apparatus operation target in an embodiment of a network apparatus of the present invention in a flowchart. A network apparatus connected to a network obtains an IP address (S001). If the network is an IPv4 network, an address is obtained using a known dynamic host configuration protocol (DHCP). In the network shown in Fig. 1, the gateway 111 usually has a DHCP server function. If the network is an IPv6 network, a 64-bit prefix is obtained using a router (the gateway 111 in Fig. 1) to combine the prefix with a 64-bit interface ID generated using a media access control (MAC) address of the apparatus. As a result, a 128-bit IPv6 address is generated.

Subsequently, an event that the apparatus is connected to the network is multicast (S002). In this operation, the information is sent, for example, to port numbers beforehand defined. It is necessary that each port number is recognized only between the network controller of the present invention and the network apparatus. Then, the system waits for a reply to the multicast from the client (S003). If no reply is received, it is assumed that an apparatus having the IP apparatus operation client does not exist on the network. The system waits for announcement from a new IP apparatus operation client connected to the network (S004). If a reply is received from the client, the target sends information of the target function thereof to the pertinent client (S005). The target function information is data in a list of types and controllable functions of apparatuses controllable as targets. The format of the information is not particularly restricted according to the present invention. For example, an extended markup language (XML) can be used.

After the function information is transmitted, the target enters a state to wait for a control instruction from the client (S006). If a control instruction is received from the client, the target executes the instruction (S007) and enters again a state to wait for a control instruction. If any control instruction is not receive from the client for a predetermined period of time, it is assumed that a timeout condition is satisfied because the client is disconnected from the network or for other reasons (S008), and the target enters a state to wait for announcement of a new client.

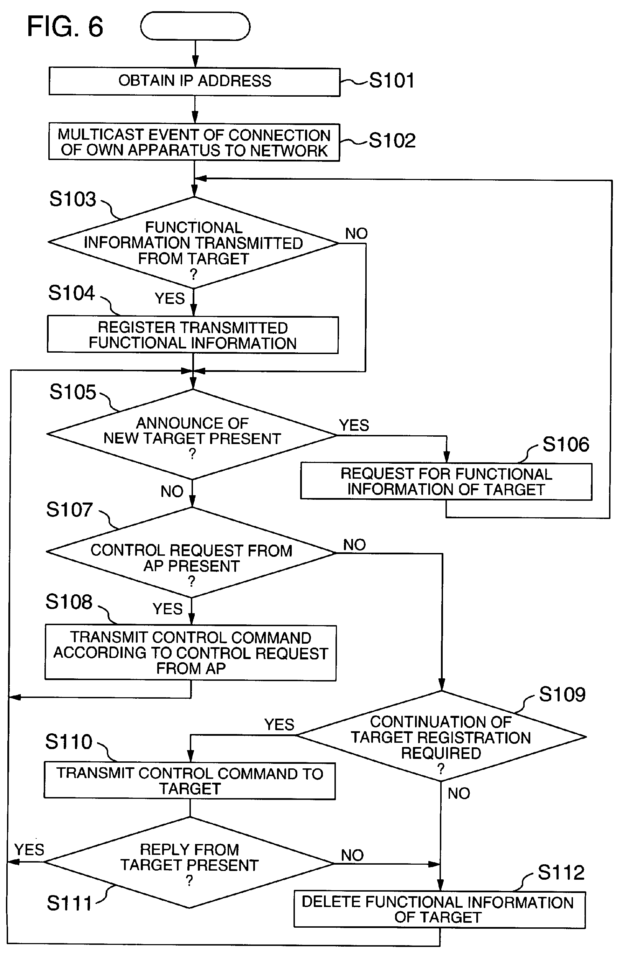

Fig. 6 shows in a flowchart a flow of processing of the IP apparatus operation client in an embodiment of a network controller according to the present invention. The client first obtains an IP address (S101) and multicasts an event of connection thereof to the network (S102). The processing up to this point is the same as that executed on the target side. After the multicast is conducted, the client waits for a reply of function information from the target (S103). If function information is received, the client registers and keeps the information. Thereafter, a check is made to determine presence or absence of multicast announcement from a new target connected to the network (S105). If such announcement is received, the client issues a request to the target to transmit function information (S106). If such announcement from a new target is not received, the client waits for a control request from the application (S107). If a control request is received, the client sends a control instruction corresponding to the control request to the target (S108) and then returns to the judgement of a new target (S105). If the request is not received from the application, the client judges whether or not continuous registration of the target is required (S109). If the continuous registration is required, the client sends a control instruction to the target (S110) to prevent a timeout condition in the target side. In this operation, the control instruction is, for example, an instruction to confirm a state of the target. If any reply is not received from the client in response to the instruction to confirm the state (S111) or if it is assumed in step S109 that there exists a target that no application requires control, the function information of the target is deleted from the client (S112).

As above, when a network apparatus is connected to a network on the client or target side, the client side recognizes the target to achieve control while continuously keeping information of controllable functions of the target. In the operation, the user can use required functions of an apparatus only by attaching the apparatus (and by detaching an apparatus according to necessity) without any troublesome setting operation. According to the present invention, the client side determines whether or not the keeping of the function information of the target is required. In comparison with an operation employed in the technique such as Jini in which the target side periodically updates the information, the client side determines whether or not the target is required by a client near the application or the user according to the present invention. The control instruction is transmitted only if the target is required. The control operation therefore results in an advantage that unnecessary traffic does not take place on the network.

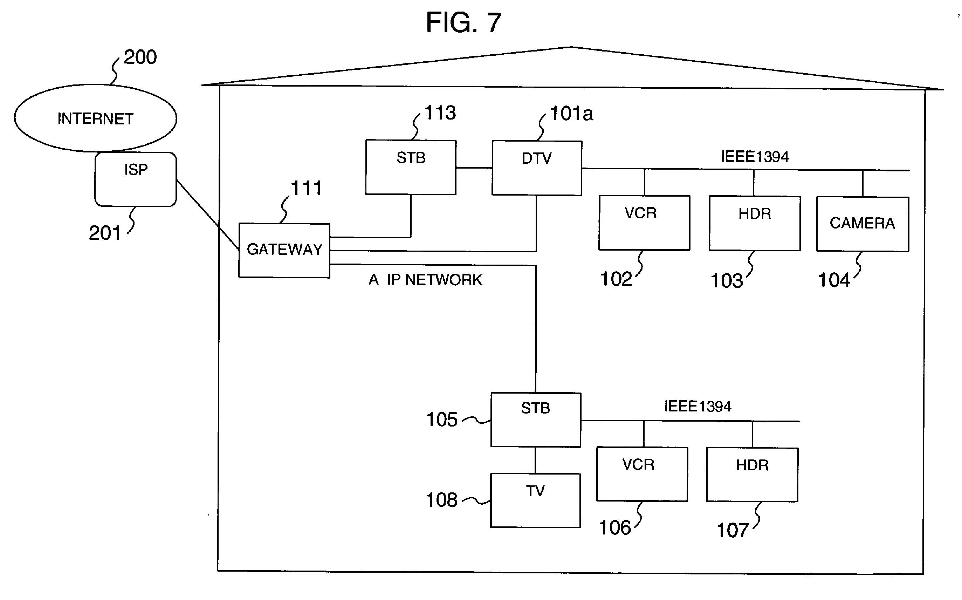

Fig. 7 shows a network including another embodiment of a network controller of the present invention and network apparatuses. In the network of Fig. 7, a settop box (STB) 105 connected to an IP network is connected via a second 1394 interface to a second VCR 106 and a second HD recorder 107, and the settop box 105 is connected via an analog interface to a TV set 109. The IP network is also connected to a settop box 113 which decodes streaming contents received from the internet and which displays the contents on a digital TV set 101a connected via an analog interface to the box 113. In the configuration, the boxes 105 and 113 have the function of an IP apparatus operation target and the DTV 101a has and IP apparatus operation clients respectively corresponding to the targets. As a result, the settop boxes 113 and 105 and the second VCR 106 and the second HD recorder 107 connected to the STB 105 can be operated by the DTV 101a.

As above, according to the present invention, it is possible to control network apparatuses without any troublesome setting operation by the user. That is, an AV-type network is connected to an information-type network, a controller on the AV-type network controls each AV apparatus connected on the AV-type network as well as each apparatus connected to the information-type network and each apparatus connected to another AV-type network or a network for electric appliances for consumer use which are connected via an information-type network to the controller.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A network controller, comprising:
a first network interface;
first control means for controlling network apparatuses connected via the first network interface to a network;
a second network interface;
second control means for controlling network apparatuses connected via the second network interface to a network; and
control transfer means for receiving a control instruction from another network controller connected via the second network interface to a network and for transmitting a control request to the first control means according to the control instruction, thereby controlling apparatuses connected to the first and second networks,
the network controller connected to the second network interface being capable of controlling the network apparatuses connected to the first network.

2. A network controller according to claim 1, wherein:
the first network interface is a high-speed serial bus specified by an IEEE1394 standard;
the second network interface is a network (to be referred to as an IP network hereinbelow) for transmitting an IP packet generally used, for example, in a local area network (LAN); and
the control transfer means interprets the control instruction received in an IP packet format and initiates control of a function of a network apparatus provided by the first control means.

3. A network controller according to claim 2, wherein:
an IP address is assigned to each of the network apparatuses connected via the first network interface;
when a control request is issued from the second network to a particular one of the network apparatuses, the particular network apparatus is specified by the IP address; and
the control transfer means converts the IP address into an identifier (ID) to identify the apparatus in the first network interface.

4. A network controller, comprising:
a first network interface;
first control means for controlling network apparatuses connected via the first network interface to a network;
a second network interface; and
control transfer means for receiving control information from another network controller connected via the second network interface to a network and for transmitting a control request to the first control means according to the control information,
the network controller connected to the second network interface being capable of controlling the network apparatuses connected to the first network.

5. A network controller according to claim 4, wherein:
the first network interface is an interface for a home network specified by an ECHONET standard;
the second network interface is a network (to be referred to as an IP network hereinbelow) for transmitting an IP packet generally used, for example, in a local area network (LAN); and
the control transfer means interprets the control instruction received in an IP packet format and initiates control of a function of a network apparatus provided by the first control means.

6. A network controller according to claim 5, wherein:
an IP address is assigned to each of the network apparatuses connected via the first network interface;
when a control request is issued from the second network to a particular one of the network apparatuses, the particular network apparatus is specified by the IP address; and
the control relay means converts the IP address into an identifier (ID) to identify the apparatus in the first network interface.

7. A network controller, wherein:
when connected to a network, the network controller obtains a network address and sends a message notifying an event of connection thereof to the network to other network apparatuses and a second network controller;
when function information of a controllable function of a network apparatus is received from the network apparatus, the network controller saves the function information, transmits a control instruction to control the network apparatus according to the information and controls the network apparatus; and
when the control of the network apparatus is terminated, the network controller discards the function information saved before.

8. A network controller according to claim 7, wherein:
when a message sent from the network apparatus connected to the network to notify connection thereof to the network is received, the network controller transmits to the network apparatus a transmission request for function information of a controllable function of the network apparatus; and
when function information of a controllable function of the network apparatus is received from the network apparatus in response to the transmission request, the network controller saves the function information.

9. A network controller according to claim 8, wherein during a period of time in which the network controller is controlling the network apparatus, the network controller issues a control information thereto within a predetermined interval of time.

10. A network apparatus, wherein:
when connected to a network, the network apparatus obtains a network address and sends a message notifying an event of connection thereof to the network to a second network controller;
when a transmission request is received from the second network controller for function information of a controllable function of the network apparatus in response to the message, the network apparatus transmits the function information to the network controller; and
the network apparatus is controlled by the network controller by receiving a control instruction to control the network apparatus according to the function information.

11. A method of controlling a network apparatus, comprising the steps of:
transmitting, by a new network controller or apparatus connected to a network, a message notifying an event of connection thereof to the network to the network;
issuing, when the new device connected to the network is a network apparatus, a transmission request for function information of a controllable function of the network apparatus from a network controller beforehand connected to the network to the network apparatus;
transmitting the function information from the network apparatus to the network controller;
transmitting, when the new device connected to the network is a network controller, from a network apparatus beforehand connected to the network, function information of a controllable function of the network apparatus to the new network controller connected to the network;
issuing a control instruction from the network controller to control the network apparatus according to the function information transmitted from the network apparatus.

12. A method of controlling a network apparatus according to claim 11, further comprising the steps of issuing, while the network controller is keeping the function information transmitted from the network apparatus, a control instruction from the network controller to the network apparatus within a predetermined interval of time.
